# EUROPEAN PATENT SPECIFICATION

(11) **EP 3 303 789 B1**
(45) Date of publication and mention of the grant of the patent: **04.03.2020**
(21) Application number: 16800386.1
(22) Date of filing: 20.05.2016
(51) Int. Cl.: F01N 5/02, F01K 23/10, F01N 3/20, F02G 5/02, F02M 31/04, F01N 3/02

(54) **AN ARRANGEMENT FOR HEATING OF AN EXHAUST GAS TREATMENT COMPONENT**
ANORDNUNG ZUR ERWÄRMUNG EINER ABGASBEHANDLUNGSKOMPONENTE
AGENCEMENT POUR LE CHAUFFAGE D'UN COMPOSANT DE TRAITEMENT DE GAZ D'ÉCHAPPEMENT

(30) Priority: 25.05.2015 SE 1550669
(43) Date of publication of application: 11.04.2018
(73) Proprietor: Scania CV AB, 151 87 Södertälje (SE)
(72) Inventor: USSNER, Matthias, 151 52 Södertälje (SE); TIMRÉN, Thomas, 619 91 Trosa (SE)
(74) Representative: Scania CV AB
(86) International application number: PCT/SE2016/050469
(87) International publication number: WO 2016/190802

(56) References cited:
- EP-A2- 1 136 675
- WO-A1-2013/160530
- WO-A1-2014/136024
- DE-A1- 2 438 118
- DE-A1- 4 436 753
- US-A1- 2005 224 045
- US-A1- 2008 276 913
- US-A1- 2012 023 946
- US-A1- 2012 222 420
- US-A1- 2014 013 743

## Description

### BACKGROUND OF THE INVENTION AND PRIOR ART

The present invention relates to an arrangement for heating of an exhaust gas treatment component according to the preamble of claim 1.

It is common to supply charged air to a combustion engines. The charged air can be cooled in one or several charge air coolers before it enters the combustion engine. An air cooled charged air cooler is usually arranged at a front portion of a vehicle. In this case, the charged air can be cooled to a temperature slightly above ambient temperature before it enters the combustion engine.

Exhaust systems of internal combustion engines such as diesel engines may comprise a plurality of exhaust treatment components such as, for example, a SCR catalyst (Selective Catalytic Reduction). In order to clean the exhaust gases from nitrogen oxides, a urea solution is sprayed into the exhaust line in a position upstream of the SCR catalyst. The urea solution is vaporized by the hot exhaust gases so that ammonia is formed. The ammonia and nitrogen oxides in the exhaust gases react with each other in the SCR catalyst so that nitrogen gas and water vapor are formed. The efficiency of a SCR catalyst depends on its temperature. The SCR catalyst have a high efficiency at a temperature above 200°C. Consequently, after a cooled start it take some time before the SCR catalyst is heated to a temperature at which it reduces the emissions of nitrogen oxides in an efficient manner.

WHR system (Waste Heat Recovery System) can be used in vehicles for recovering waste thermal energy and convert it to mechanical energy or electric energy. A WHR system includes a pump which pressurizes and circulates a working medium in a closed circuit. The circuit comprises an evaporator where the working medium is heated and evaporated by a heat source such as, for example, exhaust gases. The pressurized and heated gaseous working medium expands in an expander. The expander generates mechanical energy which can be used to operate the vehicle and/or apparatuses in the vehicle. Alternatively, the expander is connected to a generator generating electric energy. The working medium leaving the expander is directed to a condenser. The working medium is cooled down to a temperature in the condenser at which it condenses. The fuel consumption of the combustion engine can be reduced by a WHR-system.

DE102007040613 shows an assembly using the heat of an exhaust gas stream from a combustion engine in a vehicle. The assembly comprises a Rankine cycle circuit with an evaporator in which a working medium is heated by the exhaust gas stream. The heated working medium can be used in a heat exchanger for heating coolant in a cooling system cooling the combustion engine.

US 2008/276913 shows a combustion engine where the charge air is heated.

### SUMMARY OF THE INVENTION

The object of the present invention is to provide an arrangement heating an exhaust treatment component in an exhaust line to a desired operating temperature.

The above mentioned object is achieved by the arrangement according to the characterizing part of claim 1. Most exhaust treatment components have an efficient operating temperature well above ambient temperature. Thus, the exhaust treatment components have a too low temperature during a heating period after a cold start. The exhaust treatment components are heated by the exhaust gases. The length of the heating period depends on the temperature of the exhaust gases. The temperature of the exhaust gases depends in turn on the temperature of the charged air supplied to the combustion engine. The arrangement comprises a heat transfer device able to transfer heat from the working medium of a WHR system to the charge air before it enters the combustion engine and a control unit which activates the heat transfer device when the exhaust treatment component has a lower temperature than a predetermined operating temperature. The working medium of a WHR system has substantially always a considerably higher temperature than the charged air supplied to the combustion engine especially when the charged air is cooled in a charge air cooler of ambient air. In view of this fact, the working medium is a suitable heat source to heat the charge air before it enters the combustion engine. The heating of the charged air results in a higher exhaust temperature and a faster heating of the exhaust treatment component up to its efficient operating temperature. The operating time of the exhaust treatment component at a too low temperature will be reduced as well as the emissions of untreated substances in the exhaust gases.

According to an embodiment of the invention, the heat transfer device is able to transfer heat from the working medium in a position located downstream of an expander and upstream of a condenser in the WHR system to the charge air. The working medium in the WHR system is heated in the evaporator by the exhaust gases. After that the working medium expands through the expander. The working medium leaving the expander has a reduced pressure and a reduced temperature. However, the temperature of the working medium is usually high enough to heat the charged air. In this case, the working medium will be cooled in an initial step before it is cooled in the condenser by an ordinary cooling system. Such an extra cooling of the working medium may results in a lowered load on the ordinary cooling system.

According to an embodiment of the invention, the heat transfer device comprises a heat exchanger in which the charged air is heated. The charged air can be heated in a heat exchanger arranged in a charge air line supplying charged air to the combustion engine. Advantageously, the heat exchanger is arranged in the charged air line in a position downstream of a charged air cooler. The charged air obtains a relatively high temperature when it is compressed by a compressor of a turbo aggregate. After that the charge air is cooled in at least one charge air cooler before it enters the combustion engine. It is suitable to heat the charge air in a position downstream of the last charge air cooler where it has its lowest temperature.

According to an embodiment of the invention, the charged air is heated in the heat exchanger by the working medium. In this case, the heat transfer device may comprise an extra loop directing the working medium to the heat exchanger and back to the ordinary WHR system and valve member by which the control unit control the supply of the working medium form the WHR system to the heat exchanger. The extra loop may have an inlet in a position downstream of an expander and an outlet in a position upstream of a condenser of the WHR system.

According to an embodiment of the invention, the heat transfer device comprises a circuit with a circulating medium transferring heat from the working medium in the WHR system to the charged air in the heat exchanger. The heat transfer device may comprise a pump circulating the medium in the circuit, a first heat exchanger in which the medium is heated by the working medium and the heat exchanger in which the medium heats the charged air. In case the charge air line and the WHR system is arranged at a relatively long distance from each other, it can be beneficial to use such a heat transferring circuit. The medium may be a coolant. The control unit may control the activation of the circuit by turning on and off the pump.

According to an embodiment of the invention, said sensor senses the temperature of the exhaust gases in the exhaust line in a position immediately downstream of the exhaust treatment component. The temperature of the exhaust gases leaving the exhaust treatment component has substantially the same temperature as the exhaust treatment component. Alternatively, the sensor may sense the temperature of a suitable part of the exhaust treatment component.

According to an embodiment of the invention, the exhaust line comprises a heat line which comprises the evaporator and a bypass line in which the exhaust gases is led past the evaporator and that the control unit is configured to control the exhaust flow through the heat line and the bypass line by means of a valve mechanism. In this case, it is possible for the control unit to control the WHR system in a manner that favors the heating of the charged air during operating conditions when the temperature of the exhaust treatment component is too low.

According to an embodiment of the invention, the combustion engine is cooled by a cooling system with a circulating coolant, wherein the arrangement comprises a loop in the cooling system directing coolant to the heat exchanger and directing coolant back to the cooling system in a position upstream of the combustion engine. In this case, the coolant will be heated by the charge air in the heat exchanger before it enters the combustion engine. As a consequence, the combustion engine will reach its operating temperature faster after a cold start. The temperature of the exhaust gases increases which further reduces the length of the heating period of the exhaust treatment component to the predetermined operating temperature.

According to an embodiment of the invention, the control unit is configured to receive information from a sensor about the temperature of the charge air in the charged air line in a position upstream of the heat exchanger and information from a sensor about the temperature of the working medium in the WHR system. A condition for enabling heating of the charged air by the working medium, is that the working medium has a higher temperature than the charge air. Unless this condition is met, the control unit does not activate the heat transfer device. In this case, the control unit may control the WHR system in a manner such that the temperature of the working medium will increase.

### BRIEF DESCRIPTION OF THE DRAWINGS

In the following preferred embodiments of the invention are described, as examples, with reference to the attached drawings, in which:
- Fig. 1: shows a first embodiment of the arrangement and
- Fig. 2: shows a second embodiment of the arrangement.

### DETAILED DESCRIPTION OF PREFERRED EMBODIMENTS OF THE INVENTION

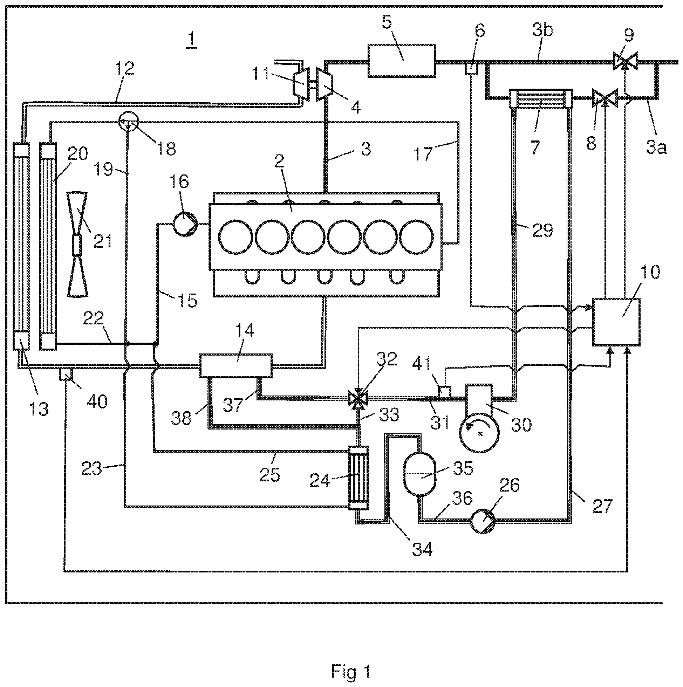

Fig. 1 shows a schematically disclosed vehicle 1 powered by a supercharged combustion engine 2. The combustion engine 2 may be a diesel engine. The vehicle 1 may be a heavy vehicle. The vehicle 1 comprises an exhaust line 3 receiving exhaust gases from the combustion engine 2. The exhaust line 3 comprises a turbine 4 of a turbo aggregate. The exhaust gases in the exhaust line 3 receive a reduced pressure and a reduced temperature when they expand through the turbine 4. A number of schematically disclosed exhaust treatment components 5 a placed in the exhaust line 3 in a position downstream of the turbine 4. The exhaust treatment components 5 may, for example, include one or several of the following exhaust treatment components namely an oxidation catalytic converter DOC, a particulate filter DPF, a SCR catalytic converter and an ammonia slip catalytic converter ASC. The efficiency of such exhaust treatment components 5 depends on its temperature. An efficient operating temperature of such exhaust treatment components is usually above 200°C. A temperature sensor 6 senses the temperature of the exhaust gases in the exhaust line 3 in a position immediately downstream of the exhaust treatment component 5.

The exhaust line 3 is branched into a heat line 3a extending through an evaporator 7 and a bypass line 3b leading the exhaust gases past the evaporator 7. The exhaust flow through the heat line 3a is controlled by a first valve 8 and the exhaust flow through the bypass line 3b is controlled by a second valve 9. A control unit 10 receives information from the temperature sensor 6 about the temperature of the exhaust gases in the exhaust line 3 when they leave the exhaust treatment component 5. The control unit 10 controls the first valve 8 and the second valve 9 and thus the exhaust flow through the evaporator 7. During most operating conditions, the control unit 10 directs the entire exhaust gas flow through the heat line 3a.

The turbine 4 drives a compressor 11 of the turbo aggregate. The compressor 11 compresses air which is led, via a charged air line 12 to the combustion engine 2. The charged air line 12 comprises a charge air cooler 13 arranged at a front portion of the vehicle 1. The charged air is cooled in the charge air cooler 13 by air of ambient temperature. The charged air line 12 comprises a heat exchanger 14 arranged in a downstream position of the charge air cooler 13.

The combustion engine 2 is cooled by a cooling system with a circulating coolant. The cooling system comprises an engine inlet line 15 provided with a coolant pump 16 circulating the coolant in the cooling system. The coolant pump 16 circulates the coolant to the combustion engine 2. An engine outlet line 17 receives the coolant leaving the combustion engine 2. A thermostat 18 is arranged at an end of the engine outlet line 17. In case the coolant has a lower temperature than the regulating temperature of the thermostat 18, the coolant is directed back to the coolant pump 16 via a bypass line 19. In case the coolant has a higher temperature than the regulating temperature of the thermostat 18, the coolant is directed to a radiator 20 arranged at a front portion of the vehicle 1 in a position behind the charge air cooler 13. The radiator fan 21 and ram air provide a cooling air flow through the charge air cooler 13 and the radiator 20. The coolant that has circulated through the radiator 20, it is directed, via a return line 22, back to the engine inlet line 15 and the coolant pump 16. The cooling system comprises a loop. The loop comprises a coolant inlet line 23 receiving coolant from the bypass line 19 or the radiator outlet line 22 depending on the position of the thermostat 18. The inlet line 23 leads coolant to a condenser 24. The loop comprises an outlet line 25 leading the coolant from the condenser 24 to the engine inlet line 15 and the coolant pump 16.

The vehicle is provided with a WHR-system (Waste Heat Recovery system). The WHR- system comprises a pump 26 which pressurizes and circulates a working medium. The working medium may be ethanol, R245fa or other kind of working medium. The pump 26 pressurizes and circulates the working medium, via an evaporator inlet line 27, to the evaporator 7. The working medium is heated in the evaporator 7 by exhaust gases to a temperature at which it evaporates. The working medium is directed from the evaporator 7, via an expander inlet line 29, to an expander 30. The pressurised and heated working medium expands in the expander 30. The expander 30 generates a rotary motion which may be transmitted, via a suitable mechanical transmission, to a shaft of the drive train of the vehicle 1. Alternatively, the expander 30 may be connected to a generator transforming mechanical energy into electrical energy. The electrical energy may be stored in a battery. After the working medium has passed through the expander 30, it is directed, via an expander outlet line 31 to a three way valve 32.

The three way valve 32 is controlled by the control unit 10. The control unit 10 may set the three way valve 32 in a first position in which it directs the working medium to the condenser 24 via a condenser inlet line 33. The working medium is cooled in the condenser 24 by the coolant in the loop 23, 25 of the cooling system. The working medium is directed from the condenser 24, via a condenser outlet line 34, to a receiver 35. The pump 26 sucks working medium, via an inlet line 36 from the bottom of the receiver 35 ensuring that only working medium in a liquid state is supplied to the pump 26. Alternatively, the control unit 10 may set the three way valve 32 in a second position in which it directs the working medium into an extra loop WHR system. The extra loop comprises a heat exchanger inlet line 37 directing the working medium to the heat exchanger 14. In this case, the working medium heats the charge air before it enters the combustion engine 2. The working medium leaving the heat exchanger 14 is directed, via a heat exchanger outlet line 39, back to the condenser inlet line 33 and the condenser 24. In this case, the working medium is cooled in two steps namely in the heat exchanger 14 by charged air and in the condenser 24 by coolant. The control unit 10 receives information from a sensor 40 sensing the temperature of the charged air in a position downstream of the charge air cooler 13 and a sensor 41 sensing the temperature of the working medium leaving the expander 30.

During operation of the combustion engine 2, the exhaust treatment components 5 are heated by the exhaust gases. An efficient operating temperature of the exhaust treatment components 5 is above a predetermined operating temperature which may be about 200°C. A temperature sensor 6 senses the temperature of the exhaust gases in the exhaust line 3 in a position downstream of the exhaust treatment components 5. The temperature of the exhaust gases 5 in this position corresponds substantially to the temperature of the exhaust treatment components 5. The control unit 10 receives substantially continuously information from the sensor 6 about the temperature of the exhaust gases and thus the temperature of the treatment components 5.

During operating conditions when the treatment components 5 have a temperature above the predetermined operating temperature, the control unit 10 sets the three valve 32 in the first position in which the working medium is directed to the condenser 24. The temperature of the treatment components 5 indicates that they provide an efficient treatment of the exhaust gases. The control unit 10 may control the first valve 8 and the second valve 9 such that the entire exhaust gas flow is directed through the heat line 3a. In this case, the working medium achieves a heating to a high temperature by the exhaust gases in the evaporator 7 which is transformed to mechanical or electrical energy in the expander 30.

During a period after a cold start of the combustion engine, it takes some time for the exhaust gases to heat the exhaust treatment components 5 to the predetermined operating temperature. As a consequence, the treatment of the exhaust gases will be unsufficient during such a heating period of the exhaust treatment components 5. The temperature of the exhaust treatment components depends on the temperature of the exhaust gases which in turn depends on the temperature of the charge air supplied to the combustion engine 2. Since the charged air is cooled in the charge air cooler by ambient air before it enters the combustion engine, the temperature of the charge air entering the combustion engine 2 may be low especially when the ambient temperature is low. When the control unit 10 receives information from the sensor 6 indicating that the temperature of the exhaust treatment components 5 is lower than the predetermined operational temperature, it controls the valves 8, 9 such that the entire exhausts is directed through the heat line 3a and the evaporator 7.

The working medium is heated in the evaporator 7 to a temperature at which it evaporates. Furthermore, the evaporated working medium may be superheated to a temperature which may be close to the temperature of the exhaust gases. The working medium is directed to the expander 30 where it expands. The working medium leaving the expander 30 has a reduced temperature and a reduced pressure. The control unit 10 receives information from the sensor 40 about the temperature of the charged air leaving the charge air cooler 13 and from the sensor 41 about the temperature of the working medium leaving the expander 30. In the most cases, the temperature of the working medium leaving the expander 30 is considerably higher than the temperature of the charged air leaving the charge air cooler 13. If that is the case, the control unit 10 sets the three way valve 32 in the second position such that the working medium is directed into the extra loop and to the heat exchanger 14 where it heats the charged air. As a consequence, the charged air achieves a higher temperature when it enters the combustion engine 2. The higher temperature of the charged air results in a higher temperature of the exhaust gases leaving the combustion engine 2. The raised temperature of the exhaust gases leading to a faster heating of the exhaust treatment components 5 to the predetermined operating temperature. In this case, it is possible to reduce the length of the heating period of the exhaust treatment components 5 and the time of less effective treatment of the exhaust gases.

The temperature of the exhaust treatment components 5 can also be too low during certain operating conditions when, for example, the ambient temperature is very low and /or when the vehicle 1 runs down a long hill. Also in this cases, it is possible to heat the charged air by the working medium in the heat exchanger 14 in order to rise the temperature of the exhaust gases and to reduce the time when the exhaust treatment components 5 have a lower temperature than a predetermined operating temperature.

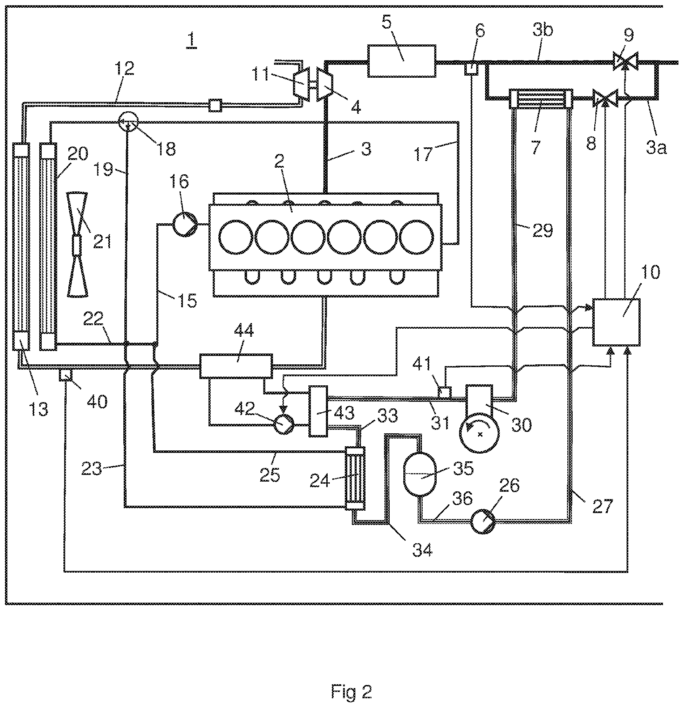

Fig. 2 shows an alternative embodiment of the arrangement. In this case, the arrangement comprises a circuit transferring heat between the working medium of the WHR system and the charged air in the charged air line 12. The circuit comprises a pump 42 circulating a medium in the circuit. The control unit 10 controls the activation of the pump 42. The medium may be a coolant. The circuit comprises a first heat exchanger 43 in which heat is transferred between the working medium in the WHR system and the medium in the circuit. The circuit comprises a second heat exchanger 44 in which heat is transferred between the medium in the circuit and charge air in the charged air line 12.

When the control unit 10 receives information indicating that the exhaust treatment components 5 have a lower temperature than the predetermined operating temperature, the control unit 10 activates the pump 42 such that it starts to circulate the medium in the circuit. The circulated medium is heated by the working medium in the first heat exchanger 43. The heated medium is circulated from the first heat exchanger 43 to the second heat exchanger 44 where the medium heats the charged air in the charged air line 12. The medium is cooled in the second heat exchanger 44 so that it is again able to transform thermal energy from the WHR system to the charged air in the charge air line 12 during operating conditions when the exhaust treatment components 5 have a too low temperature. When the control unit 10 receives information indicating that the exhaust treatment components 5 have reached the predetermined operating temperature, the control unit 10 shuts off the pump 42 and the circulation the coolant in the circuit.

The invention is not restricted to the described embodiment but may be varied freely within the scope of the claims.

## Claims

1. An arrangement for heating of an exhaust treatment component (5) in an exhaust line (3) of a combustion engine (2) in a vehicle (1), wherein the vehicle (1) comprises a WHR system comprising an evaporator (7) in which a working medium is heated by the exhaust gases in exhaust line (3) and a charge air line (12) leading charged air to the combustion engine (2), wherein the arrangement comprises a sensor (6) sensing a parameter related to the temperature of the exhaust treatment component (5), a heat transfer device able to transfer heat from the working medium in the WHR system to the charge air in the charge air line (12), and a control unit (10) configured to receive information from said sensor (6) about said parameter and to activate said heat transfer device such that the charged air in the charged air line (12) is heated during operating condition when said parameter indicates that the exhaust treatment component (5) has a lower temperature than a predetermined operating temperature, **characterized in that** the heat transfer device comprises a heat exchanger (14, 44) in which the charged air is heated and wherein the heat exchanger (14, 44) is arranged in the charged air line (12) in a position downstream of a charged air cooler (13) and upstream of the combustion engine (2) and wherein the charged air is heated in the heat exchanger (14) by the working medium and wherein the heat transfer device comprises an extra loop (37, 38) directing the working medium to the heat exchanger and back to the ordinary WHR system and valve member (32) by which the control unit (10) control the supply of the working medium form the WHR system to the heat exchanger (14).

2. An arrangement according to claim 1, **characterized in that** the heat transfer device is able to transfer heat from the working medium in a position located downstream of an expander (30) and upstream of a condenser (24) in the WHR system to the charge air.

3. An arrangement according to claim 1, **characterized in that** the heat transfer device comprises a circuit with a circulating medium transferring heat from the working medium in the WHR system to the charged air in the heat exchanger (44).

4. Arrangement according to claim 3, **characterized in that** the heat transfer device comprises a pump (42) circulating the medium in the circuit, a first heat exchanger (43) in which the medium is heated by the working medium and the heat exchanger (44) in which the medium heats the charged air.

5. Arrangement according to any one of the preceding claims, **characterized in that** said sensor (6) senses the temperature of the exhaust gases in the exhaust line (3) in a position immediately downstream of the exhaust treatment component (5).

6. Arrangement according to any one of the preceding claims, **characterized in that** the exhaust line (3) comprises a heat line (3a) which comprises the evaporator and a bypass line (3b) in which the exhaust gases is led past the evaporator (7) and that the control unit (10) is configured to control the exhaust flow through the heat line (3a) and the bypass line (3b) by means of a valve mechanism (8, 9).

7. Arrangement according to any one of the preceding claims, **characterized in that** the combustion engine is cooled by a cooling system with a circulating coolant, wherein the arrangement comprises a loop (23, 25) in the cooling system directing coolant to the heat exchanger (14, 44) and directing coolant back to the cooling system in a position upstream of the combustion engine (2).

8. Arrangement according to any one of the preceding claims, **characterized in that** the control unit (10) is configured to receive information from a sensor (40) about the temperature of the charge air in the charged air line (12) in a position upstream of the heat exchanger (14, 44) and information from a sensor (41) about the temperature of the working medium in the WHR system.

## Patentansprüche

1. Anordnung zum Beheizen einer Abgasbehandlungskomponente (5) in einer Abgasleitung (3) eines Verbrennungsmotors (2) in einem Fahrzeug (1), wobei das Fahrzeug (1) ein Abwärmerückgewinnungssystem mit einem Verdampfer (7), in dem ein Arbeitsmedium durch die Abgase in der Abgasleitung (3) erwärmt wird, und einer Ladeluftleitung (12) aufweist, die Ladeluft zum Verbrennungsmotor (2) führt, wobei die Anordnung einen Sensor (6), der einen mit der Temperatur der Abgasbehandlungskomponente (5) in Beziehung stehenden Parameter erfasst, eine Wärmeübertragungseinrichtung, die dazu in der Lage ist, Wärme aus dem Arbeitsmedium in dem Abwärmerückgewinnungssystem auf die Ladeluft in der Ladeluftleitung (12) zu übertragen, und eine Steuereinheit (10) aufweist, die dazu eingerichtet ist, von dem Sensor (6) Information über den Parameter zu empfangen und die Wärmeübertragungseinrichtung zu aktivieren, so dass die Ladeluft in der Ladeluftleitung (12) während einer Betriebsbedingung erwärmt wird, wenn der Parameter angibt, dass die Abgasbehandlungskomponente (5) eine niedrigere Temperatur hat als eine vorbestimmte Betriebstemperatur, **dadurch gekennzeichnet, dass** die Wärmeübertragungseinrichtung einen Wärmetauscher (14, 44) aufweist, in dem die Ladeluft erwärmt wird, wobei der Wärmetauscher (14, 44) in der Ladeluftleitung (12) an einer Stelle stromabwärts eines Ladeluftkühlers (13) und stromaufwärts des Verbrennungsmotors (2) angeordnet ist, und wobei die Ladeluft in dem Wärmetauscher (14) durch das Arbeitsmedium erwärmt wird und wobei die Wärmeübertragungseinrichtung einen zusätzlichen Kreis (37, 38) aufweist, der das Arbeitsmedium zum Wärmetauscher und zurück zu dem normalen Abwärmerückgewinnungssystem und einem Ventilglied (32) leitet, mit dem die Steuereinheit (10) die Zufuhr des Arbeitsmediums aus dem Abwärmerückgewinnungssystem zu dem Wärmetauscher (14) steuert.

2. Anordnung nach Anspruch 1, **dadurch gekennzeichnet, dass** die Wärmeübertragungseinrichtung dazu in der Lage ist, Wärme aus dem Arbeitsmedium auf die Ladeluft zu übertragen an einer Stelle, die sich stromabwärts eines Entspannungsgefäßes (30) und stromaufwärts eines Kondensators (24) in dem Abwärmerückgewinnungssystem befindet.

3. Anordnung nach Anspruch 1, **dadurch gekennzeichnet, dass** die Wärmeübertragungseinrichtung einen Kreis mit einem Umlaufmedium aufweist, das Wärme aus dem Arbeitsmedium in dem Abwärmerückgewinnungssystem auf die Ladeluft in dem Wärmetauscher (44) überträgt.

4. Anordnung nach Anspruch 3, **dadurch gekennzeichnet, dass** die Wärmeübertragungseinrichtung eine Pumpe (42), die das Medium in dem Kreis zirkuliert, einen ersten Wärmetauscher (43), in dem das Medium durch das Arbeitsmedium erwärmt wird, und den Wärmetauscher (44) aufweist, in dem das Medium die Ladeluft erwärmt.

5. Anordnung nach einem der vorhergehenden Ansprüche, **dadurch gekennzeichnet, dass** der Sensor (6) die Temperatur der Abgase in der Abgasleitung (3) an einer Stelle unmittelbar stromabwärts der Abgasbehandlungskomponente (5) erfasst.

6. Anordnung nach einem der vorhergehenden Ansprüche, **dadurch gekennzeichnet, dass** die Abgasleitung (3) eine Heizleitung (3a) aufweist, die den Verdampfer und eine Bypassleitung (3b) umfasst, in der die Abgase an dem Verdampfer (7) vorbeigeleitet werden, und dass die Steuereinheit (10) dazu eingerichtet ist, den Abgasstrom durch die Heizleitung (3a) und die Bypassleitung (3b) mittels einer Ventileinrichtung (8, 9) zu steuern.

7. Anordnung nach einem der vorhergehenden Ansprüche, **dadurch gekennzeichnet, dass** der Verbrennungsmotor durch ein Kühlsystem mit einem zirkulierenden Kühlmittel gekühlt ist, wobei die Anordnung einen Kreis (23, 25) in dem Kühlsystem aufweist, der Kühlmittel zu dem Wärmetauscher (14, 44) leitet und Kühlmittel an einer Stelle stromaufwärts des Verbrennungsmotors (2) zurück in das Kühlsystem leitet.

8. Anordnung nach einem der vorhergehenden Ansprüche, **dadurch gekennzeichnet, dass** die Steuereinheit (10) dazu eingerichtet ist, Information von einem Sensor (40) über die Temperatur der Ladeluft in der Ladeluftleitung (12) an einer Stelle stromaufwärts des Wärmetauschers (14, 44) und Information von einem Sensor (41) über die Temperatur des Arbeitsmediums in dem Abwärmerückgewinnungssystem zu erhalten.

## Revendications

1. Agencement pour le chauffage d'un composant de traitement d'échappement (5) dans une conduite d'échappement (3) d'un moteur à combustion (2) dans un véhicule (1), dans lequel le véhicule (1) comprend un système WHR comprenant un évaporateur (7) dans lequel un milieu de travail est chauffé par les gaz d'échappement dans une conduite d'échappement (3) et une conduite d'air de suralimentation (12) conduisant l'air de suralimentation vers le moteur à combustion (2), dans lequel l'agencement comprend un capteur (6) détectant un paramètre lié à la température du composant de traitement d'échappement (5), un dispositif de transfert de chaleur capable de transférer de la chaleur du milieu de travail dans le système WHR à l'air de suralimentation dans la conduite d'air de suralimentation (12), et une unité de commande (10) configurée pour recevoir des informations dudit capteur (6) à propos dudit paramètre et pour activer ledit dispositif de transfert de chaleur de telle sorte que l'air de suralimentation dans la conduite d'air de suralimentation (12) est chauffé durant les conditions de fonctionnement lorsque ledit paramètre indique que le composant de traitement d'échappement (5) a une température inférieure à une température de fonctionnement prédéterminée, **caractérisé en ce que** le dispositif de transfert de chaleur comprend un échangeur de chaleur (14, 44) dans lequel l'air de suralimentation est chauffé et dans lequel l'échangeur de chaleur (14, 44) est agencé dans la conduite d'air de suralimentation (12) dans une position en aval d'un refroidisseur d'air de suralimentation (13) et en amont du moteur à combustion (2) et dans lequel l'air de suralimentation est chauffé dans l'échangeur de chaleur (14) par le milieu de travail et dans lequel le dispositif de transfert de chaleur comprend une boucle supplémentaire (37, 38) dirigeant le milieu de travail vers l'échangeur de chaleur et de retour au système WHR ordinaire et à l'élément de soupape (32) par lequel l'unité de commande (10) contrôle l'alimentation du milieu de travail du système WHR à l'échangeur de chaleur (14).

2. Agencement selon la revendication 1, **caractérisé en ce que** le dispositif de transfert de chaleur est capable de transférer de la chaleur du milieu de travail dans une position située en aval d'un expanseur (30) et en amont d'un condenseur (24) dans le système WHR à l'air de suralimentation.

3. Agencement selon la revendication 1, **caractérisé en ce que** le dispositif de transfert de chaleur comprend un circuit avec un milieu circulant transférant la chaleur du milieu de travail dans le système WHR à l'air de suralimentation dans l'échangeur de chaleur (44).

4. Agencement selon la revendication 3, **caractérisé en ce que** le dispositif de transfert de chaleur comprend une pompe (42) circulant le milieu dans le circuit, un premier échangeur de chaleur (43) dans lequel le milieu est chauffé par le milieu de travail et l'échangeur de chaleur (44) dans lequel le milieu chauffe l'air de suralimentation.

5. Agencement selon l'une quelconque des revendications précédentes, **caractérisé en ce que** ledit capteur (6) détecte la température des gaz d'échappement dans la conduite d'échappement (3) dans une position immédiatement en aval du composant de traitement d'échappement (5).

6. Agencement selon l'une quelconque des revendications précédentes, **caractérisé en ce que** la conduite d'échappement (3) comprend une conduite de chaleur (3a) qui comprend l'évaporateur et une conduite de dérivation (3b) dans laquelle les gaz d'échappement sont dirigés au-delà de l'évaporateur (7) et **en ce que** l'unité de commande (10) est configurée pour contrôler le débit d'échappement à travers la conduite de chaleur (3a) et la conduite de dérivation (3b) au moyen d'un mécanisme de vanne (8, 9).

7. Agencement selon l'une quelconque des revendications précédentes, **caractérisé en ce que** le moteur à combustion est refroidi par un système de refroidissement avec un liquide de refroidissement circulant, dans lequel l'agencement comprend une boucle (23, 25) dans le système de refroidissement dirigeant le liquide de refroidissement vers l'échangeur de chaleur (14, 44) et dirigeant le liquide de refroidissement de retour vers le système de refroidissement dans une position en amont du moteur à combustion (2).

8. Agencement selon l'une quelconque des revendications précédentes, **caractérisé en ce que** l'unité de commande (10) est configurée pour recevoir des informations d'un capteur (40) sur la température de l'air de suralimentation dans la conduite d'air de suralimentation (12) dans une position en amont de l'échangeur de chaleur (14, 44) et des informations d'un capteur (41) sur la température du milieu de travail dans le système WHR.
